Europäisches Patentamt

European Patent Office

Office européen des brevets

(19)

(11) Numéro de publication : **0 448 450 A1**

# (12) DEMANDE DE BREVET EUROPEEN

(21) Numéro de dépôt : **91400707.5**

(51) Int. Cl.⁵ : **H04N 7/00, H04N 11/02**

(22) Date de dépôt : **15.03.91**

(30) Priorité : 20.03.90 FR 9003550

(43) Date de publication de la demande :
25.09.91 Bulletin 91/39

(84) Etats contractants désignés :
DE GB

(71) Demandeur : ETAT FRANCAIS représenté par
le Ministre des Postes, Télécommunications
et de l'Espace
(CENTRE NATIONAL D'ETUDES DES
TELECOMMUNICATIONS), 38-40 rue du
Général Leclerc
F-92131 Issy-les-Moulineaux (FR)
Demandeur : TELEDIFFUSION DE FRANCE
10, rue d'Oradour sur Glane
F-75932 Paris Cédex 15 (FR)

(72) Inventeur : Bernard, Philippe
175, rue de Belle Epine
F-35510 Cesson Sevigne (FR)

(74) Mandataire : Fréchède, Michel et al
Cabinet Plasseraud 84, rue d'Amsterdam
F-75009 Paris (FR)

(54) **Procédé et dispositif de codage-décodage d'un signal numérique de télévision haute définition en bande étroite.**

(57)    L'invention concerne un procédé et un dispositif de codage-décodage d'un signal numérique de télévision HD en un signal codé en bande étroite.

Le signal numérique étant représentatif d'images haute définition échantillonnées à une fréquence f1, le signal codé correspond à un signal à bande étroite échantillonné à f2 < f1. Le codage en bande étroite est effectué par une compression horizontale par décimation des images haute définition de façon à ramener le nombre N1 de points utiles par ligne à une valeur N2 = αN1 après compression dans le rapport des fréquences d'échantillonnage pour constituer ainsi un signal codé représentatif d'une ligne d'image et d'images haute définition à format réduit.

Application aux signaux de télévision numérique codés en bande étroite diffusés sur un canal HD-MAC BE.

EP 0 448 450 A1

FIG.2a.

## PROCEDE ET DISPOSITIF DE CODAGE-DECODAGE D'UN SIGNAL NUMERIQUE DE TELEVISION HAUTE DEFINITION EN BANDE ETROITE

La présente invention est relative à un procédé de codage et de décodage d'un signal numérique de télévision haute définition en un signal codé en bande étroite sur un canal HD-MAC, et au dispositif de codage et de décodage correspondant.

A l'heure actuelle, les normes ou protocoles d'émission des signaux de télévision sont en pleine évolution, notamment en raison de la mise en place, dans un future proche, d'un ou plusieurs standards d'émission pour la télévision à haute définition, TV.HD.

Dans le cadre du projet EUREKA 95, les partenaires européens ont déjà établi les caractéristiques essentielles d'un système de diffusion d'émission de TV.HD, au moyen d'un canal de type HD-MAC.

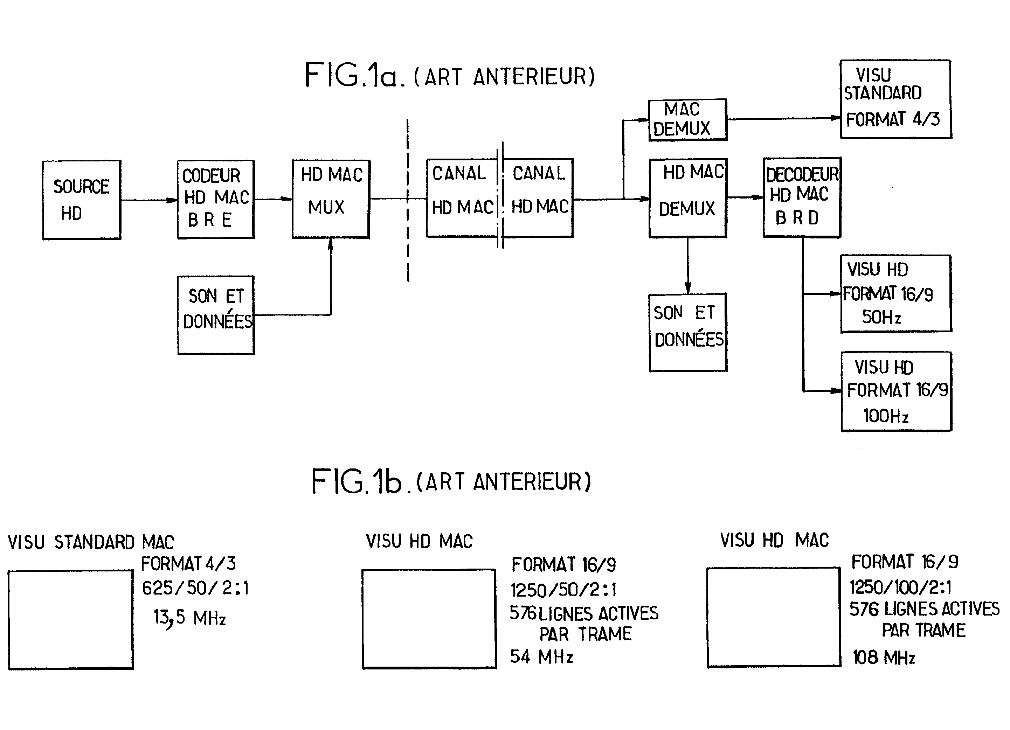

Un tel système, tel que représenté en figure 1a, comporte à partir d'une source à haute définition, source HD, un codeur HD-MAC (Band reduction encoder), permettant d'assurer une réduction de largeur de bande des échantillons de données vidéo en vue de leur transmission sur le canal HD-MAC. Un multiplexeur MUX HD-MAC permet un multiplexage temporel au standard HD-MAC, lequel est ensuite transmis par le canal HD-MAC via une liaison par satellite.

Côté réception, un démultiplexeur HD-MAC DEMUX permet, après démodulation, de restituer d'une part les données de son et d'assistance TV, et d'autre part, par l'intermédiaire d'un décodeur HD-MAC (Band restitution decoder) de restituer la largeur de bande initiale, donc l'image HD. Les images HD peuvent être restituées soit à fréquence image de 50 Hz, soit à fréquence image double, afin de supprimer le phénomène de papillotement visible sur les image HD.

Pour une description plus complète de tels systèmes HD-MAC on pourra se reporter utilement aux articles publiés par Marie Jean COLAITIS "Le système HD-MAC Principes et aspects en bande de base" et Jacques VEILLARD "Le système HDMAC aspects radioélectriques", publiés dans la revue l'Onde Electrique Juillet-Août 1989 Vol. 69 n° 4, pages 13 à 19 et pages 20 à 25 respectivement.

En ce qui concerne les formats de visualisation des images, ainsi que représenté en figure 1b, on rappelle qu'un canal de type HD-MAC permet, pour une analyse d'image par la source HD sur deux trames d'analyse entrelacées, de restituer des images au format 16/9 à 1 250 lignes utiles, sur deux trames entrelacées 2:1, à une fréquence image de 50 Hz ou 100 Hz. Chaque ligne comporte 1440 points images et chaque trame comporte 576 lignes actives, et les composantes vidéo de luminance et de chrominance correspondent à une fréquence de base du codeur BRE et du décodeur BRD de type HD-MAC, égale à 54 MHz.

On notera en outre, ainsi qu'on l'a représenté en figure 1a, que la mise en oeuvre d'un démultiplexeur MAC de type D2-MAC, après démodulation du signal transmis par le canal HD-MAC, permet de restituer à partir d'un signal en bande de base de largeur 10,125 MHz une image en visualisation standard MAC au format 4/3 comportant 625 lignes d'image, sur deux trames entrelacées 2:1 à une fréquence image de 50 Hz.

En ce qui concerne les données d'assistance DATV, celles-ci sont émises sur le canal HD-MAC en codage duobinaire à une fréquence de 20,25 MHz soit avec un débit de 1,1 bits/s pendant les 24 lignes de suppression de trame.

Actuellement, les signaux d'image HD au format 16/9 ne peuvent être diffusées sur le réseau terrestre que ce soit le réseau câblé ou le réseau par relais hertzien. Ces réseaux peuvent au plus permettre la diffusion d'images au format 4/3 en qualité PAL ou SECAM, la largeur de bande de fréquence en bande de base transmissible par ces réseaux étant limitée à 6,75 MHz.

La présente invention a pour objet de fournir un procédé et un dispositif de codage décodage de signal numérique de télévision HD susceptibles de permettre la diffusion d'images HD au format 16/9 sur un canal de type HD-MAC et leur transmission sur les réseaux de distribution terrestres tels que les réseaux câblés ou les réseaux à relais hertziens.

Dans ce but le procédé et le dispositif de codage décodage objets de l'invention permettent d'effectuer une émission en bande étroite de signaux numériques de télévision HD, sur un canal de type HD-MAC, noté HD-MAC BE, l'émission en bande étroite étant effectuée par repliement du spectre de fréquence en bande de base afin de ramener la largeur de bande du signal en bande de base de 13,50 MHz à 9 MHz.

Un autre objet de la présente invention est également d'assurer une compatibilité des signaux codés en bande étroite, HD-MAC BE, avec les équipements préexistants du canal HD-MAC, réducteur de bande, BRE, et le décodeur HDMAC restituteur de bande, BRD.

Un autre objet de la présente invention est également la mise en oeuvre d'un procédé et d'un dispositif de codage-décodage en bande étroite d'un signal numérique de télévision HD, permettant d'assurer une compatibilité avec les normes de production d'images HD telles que définies par le CCIR, (Comité Consultatif International des Radio Communications), tant sur la base des standards d'analyse :

– HDP (Haute Définition balayage progressif, balayage par ligne sur une seule trame, la fréquence d'échantillonnage étant égale à 144 MHz, [High Definition Progressive]),

– HDQ (Haute Définition Quinconce ligne, à fréquence d'échantillonnage égale à 72 MHz, [High Definition Quinconce]),

– HDI (Haute Définition balayage entrelacé, à fréquence d'échantillonnage égale à 72 MHz [High Definition Interlace]).

On notera que, pour les trois standards d'analyse d'image précités, les fréquences d'échantillonnage image sont ramenées, par sous échantillonnage, à la fréquence de base du codeur HD-MAC réducteur de bande, BRE, soit à 54 MHz, cette opération de sous échantillonnage étant par exemple effectuée au niveau du convertisseur analogique numérique équipant la source HD.

Un autre objet de la présente invention est la mise en oeuvre d'un procédé et d'un dispositif de codage décodage d'un signal numérique de télévision codé en bande étroite compatible avec les normes de production en balayage d'analyse progressif à 625 lignes par images en format de visualisation d'image 16/9 dont les signaux correspondent à une fréquence d'échantillonnage égale à 36 MHz.

Le procédé de codage d'un signal numérique de télévision haute définition en un signal codé en bande étroite, en vue de la diffusion de ce signal numérique sur un canal de type HD-MAC, ce signal numérique de télévision étant représentatif d'images en haute définition échantillonnées à une fréquence f1 et le signal codé correspondant à un signal à bande étroite échantillonné à une fréquence d'échantillonnage f2, en vue de sa diffusion en bande étroite HD-MAC BE, f2 étant inférieur à f1, est remarquable en ce qu'il consiste à effectuer une compression horizontale, par décimation, des images à haute définition, de façon à ramener le nombre N1 de points utiles, par ligne, de l'image haute définition, à une valeur N2 = αN1, après compression, dans le rapport des fréquences d'échantillonnage, $\alpha = \dfrac{f2}{f1}$.

Le signal codé en bande étroite est ainsi représentatif d'une ligne d'image et d'images haute définition à format réduit.

Le procédé de décodage d'un signal numérique de télévision HD codé en un signal codé en bande étroite HD-MAC BE, selon le procédé de codage objet de l'invention, est remarquable en ce qu'il comprend, à la réception, une étape de décompression horizontale de ligne d'image.

Le dispositif de codage d'un signal numérique de télévision haute définition en un signal codé en bande étroite, en vue de la diffusion de ce signal numérique de télévision sur un canal de type HD-MAC objet de la présente invention, ce signal numérique de télévision étant représentatif d'images en haute définition échantillonnées à une fréquence f1 et le signal codé correspondant à un signal échantillonné à une fréquence f2, en vue de sa diffusion en bande étroite, HD-MAC BE, est remarquable en ce qu'il comprend des moyens de compression horizontale, par décimation des images en haute définition, de façon à ramener le nombre N1 de points utiles, par ligne de l'image haute définition, à une valeur N2 = α N1, après compression, dans le rapport des fréquences d'échantillonnage $\alpha = \dfrac{f2}{f1}$

Le signal codé en bande étroite est ainsi représentatif d'une ligne d'image et d'images haute définition à format réduit.

Le dispositif de décodage d'un signal numérique de télévision codé en bande étroite et diffusé sur un canal HD-MAC, objet de la présente invention, ce signal numérique de télévision étant représentatif d'images HD échantillonnées à une fréquence f1 et le signal codé en bande étroite correspondant à un signal échantillonné à une fréquence f2, avec f2 < f1, est remarquable en ce qu'il comprend des moyens de restitution de format d'image par décompression hroizontale de ligne d'image.

Le procédé et le dispositif de codage décodage d'un signal numérique de télévision HD codé en bande étroite et diffusé sur un canal HD-MAC, selon l'invention, trouve une application très avantageuse aux réseaux terrestres de distribution de télévision, réseaux câblés ou relais hertziens, les matériels préexistants tels que le codeur HD-MAC, codeur réducteur de bande BRE, et décodeur HD-MAC, décodeur restituteur de bande, BRD, pouvant être utilisés sans modifications, les dispositifs de codage respectivement décodage en bande étroite objets de la présente invention étant destinés à jouer le rôle de circuit d'interface amont respectivement aval du codeur BRE respectivement du décodeur BRD.

Le procédé et le dispositif de codage décodage d'un signal numérique de télévision HD en bande étroite, objet de l'invention, seront mieux compris à la lecture de la description et à l'observation des dessins ci-après dans lesquels outre les figures 1a et 1b relatives à l'art antérieur,

– la figure 2a représente un schéma illustratif relatif à la mise en oeuvre du procédé objet de l'invention, dans le cas du codage,

– la figure 2b représente un organigramme des étapes permettant la mise en oeuvre effective du procédé objet de l'invention illustré précédemment en figure 2,

– la figure 3 représente un schéma illustratif relatif à la mise en oeuvre du procédé objet de l'invention dans le cas du décodage,

– la figure 4 représente un schéma illustratif d'un dispositif de codage permettant la mise en oeuvre du procédé de codage objet de l'invention,

– la figure 5 représente un schéma illustratif relatif à un mode de réalisation avantageux du calculateur représenté en figure 4,

– la figure 6 représente, de manière semblable à la figure 4, un schéma illustratif d'un dispositif de décodage permettant la mise en oeuvre du procédé de décodage objet de la présente invention,

– la figure 7 représente à titre purement illustratif, l'architecture générale d'un canal de diffusion d'un signal numérique de télévision codé en bande étroite dit de type HD-MAC BE, conformément à l'objet de la présente invention.

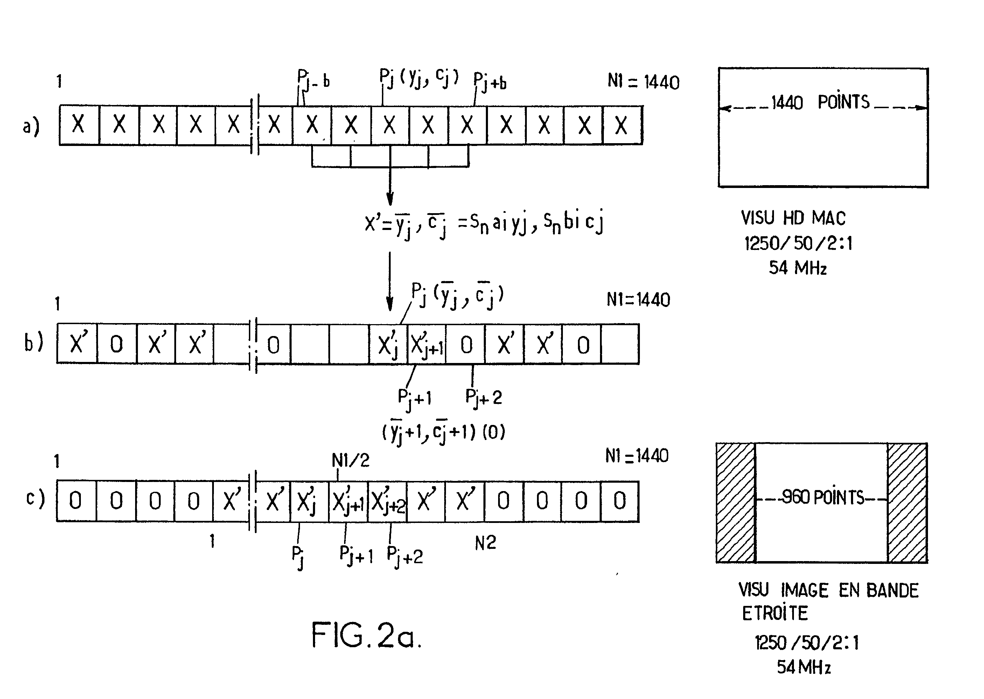

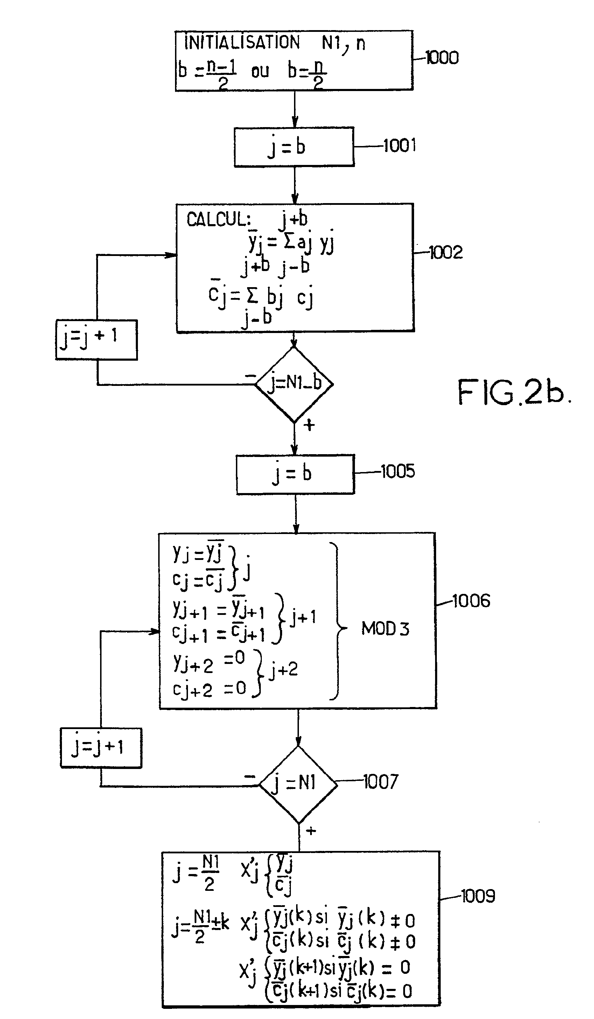

Une description plus détaillée du procédé et du dispositif de codage-décodage objets de la présente invention sera donnée tout d'abord avec les figures 2a et 2b.

Ainsi qu'on l'a représenté de manière schématique en figure 2a, le procédé objet de la présente invention consiste à effectuer un codage du signal numérique de télévision haute définition en amont du codeur HD-MAC BRE en vue d'assurer la diffusion en bande étroite du signal numérique précité.

Ainsi qu'on pourra le remarquer sur la figure 2a, le processus de codage consiste à effectuer une compression horizontale, par décimation, au niveau de chaque ligne des images à haute définition, de façon à ramener le nombre N1 de points utiles par ligne de cette image à une valeur N2 = $\alpha$N1 après compression. Le nombre des points utiles est ainsi ramené dans le rapport des fréquences d'échantillonnage, $\alpha$ = f2/f1 où f2 représente la fréquence d'échantillonnage du signal codé en bande étroite.

Sur la figure 2a au point $\underline{a}$ de celle-ci, on a représenté les valeurs de composantes vidéo du signal numérique haute définition, ces composantes vidéo relatives à chaque point image ou pixel d'une ligne de 1 440 points étant notées X et représentant de manière classique les composantes de luminance et de chrominance.

Ainsi qu'on pourra le remarquer sur la figure 2a, le processus de décimation par ligne consiste à calculer sur $\underline{n}$ points images consécutifs d'une ligne, ces points étant notés pj-b à pj+b avec b=n/2 ou b=(n-1)/2, la valeur moyenne pondérée notée Yj, Cj des composantes de luminance Yj et de chrominance CJ des points images considérés. Sur la figure 2a la notation X' désigne le couple des valeurs Yj, Cj associées à chaque point image pj d'une ligne d'image considérée.

Conformément au procédé objet de l'invention tel que représenté schématiquement en figure 2a, celui-ci consiste ensuite à attribuer à deux points, par exemple pj, pj+1 successifs $\underline{\text{sur trois}}$ pour valeurs de luminance Yj et de chrominance Cj respectivement Yj+1, Cj+1 les valeurs moyennes $\overline{Yj}$, $\overline{Cj}$ respectivement $\overline{Yj+1}$, $\overline{Cj+1}$ de composantes de luminance et de chrominance précédemment calculées. Les valeurs de composantes de luminance et de chrominance du troisième point pj+2 des trois points successifs sont alors fixées à une valeur arbitraire, laquelle est représentée conventionnellement par la valeur zéro au point $\underline{b}$ de la figure 2a. On comprendra bien sûr que la valeur zéro est purement illustrative et que celle-ci peut correspondre à une valeur de gris arbitraire en luminance et en chrominance par exemple.

Bien entendu, les opérations précédentes sont répétées pour tous les points images pj d'ordre j de la ligne considérée pour j compris entre

$$\frac{n}{2} \leqslant j \leqslant N1 - \frac{n}{2} \qquad\qquad \text{si n est pair}$$

ou

$$(n-1)/2 \leqslant j \leqslant N1 - (n-1)/2 \qquad\qquad \text{si n est impair.}$$

On notera en particulier que pour les points pj d'ordre j compris respectivement entre 1 et n/2 et entre N1 - n/2 et N1, un traitement particulier pourra être effectué, ce traitement pouvant simplement consister en une extrapolation des valeurs moyennes pondérées pour les points images pj d'ordre j précités.

Suite à la mise en oeuvre de l'étape telle que représentée au point b en figure 2a, on dispose alors pour la ligne d'image haute défintion considérée d'une suite de valeurs de composantes vidéo consistant en deux valeurs moyennes pondérées successives suivies d'une valeur arbitraire intercalée.

Le procédé de codage objet de l'invention consiste alors, ainsi que représenté en figure 2a au point $\underline{c}$, à réordonner les valeurs calculées de composantes vidéo, les valeurs non arbitraires attribuées aux valeurs de composantes de luminance et de chrominance, ce réordonnancement étant effectué par rapport au point image milieu d'ordre N1/2. Les valeurs arbitraires de luminance et de chrominance X' des points images décimés sont alors réordonnées en extrémité de ligne correspondante pour constituer ainsi une ligne et finalement une image de format utile réduit recentrée par rapport au point image milieu d'ordre N1/2.

Sur la figure 2a, on a également représenté le format d'image haute définition comportant 1 250 lignes de chacune 1 440 points avant codage, puis le format d'image qui sera obtenu à partir du signal codé en bande étroite, ce format correspondant à 960 points utiles sur les 1 440 points par ligne, les points extrêmes de chaque ligne étant amenés à la valeur arbitraire et finalement à la valeur de composante de gris précédemment citée.

Une description plus détaillée d'un mode opératoire permettant la mise en oeuvre du procédé de codage objet de l'invention sera donnée en liaison avec la figure 2b.

Bien entendu, le traitement des valeurs de composantes de luminance et de chrominance est effectué au moyen d'un programme de calcul, lequel peut comporter ainsi que représenté en figure 2b, les étapes essentielles suivantes : le programme de calcul précité comprend tout d'abord une étape d'initialisation des paramètres N1, $\underline{n}$ et $\underline{b}$ en fonction de la parité de $\underline{n}$. Les étapes d'initialisation 1000 et 1001 sur la figure 2b sont alors suivies pour le point image pj considéré, d'une étape de calcul 1002 des moyennes pondérées sur les n points des valeurs de luminance Yi et de chrominance Cj. Un test 1003 suivi d'une incrémentation de l'ordre $\underline{j}$ du point pj considéré en 1004, permet d'effectuer le calcul précité pour l'ensemble des points pj de la ligne d'image considérée.

Le calcul 1002 est effectué pour l'ensemble des points précités et pour le point pj d'ordre N1-b, les valeurs pondérées de luminance et de chrominance sont ainsi obtenues.

Une nouvelle étape d'initialisation 1005 suivie d'un programme de tri 1006 permet alors d'affecter pour deux points images successifs d'ordre j, j+1 les valeurs pondérées de luminance et de chrominance correspondantes, au point image d'ordre j+2 étant affectée la valeur arbitraire zéro. Un test sur la valeur de l'ordre $\underline{j}$ en 1007 par rapport à la valeur limite N1 et une incrémentation de l'ordre $\underline{j}$ en 1008 permet d'effectuer, pour la totalité des points images de la ligne d'image, l'insertion de la valeur arbitraire zéro entre deux valeurs calculées successives, ainsi que représenté au point $\underline{b}$ de la figure 2a.

Un programme 1009 de tri par rapport au point image milieu, d'ordre N1/2, permet, sur comparaison par rapport à la valeur arbitraire par exemple des composantes de chrominance et de luminance, de réordonner les valeurs calculées non arbitraires pour constituer la ligne d'image haute définition à format réduit, tel que représenté au point $\underline{c}$ de la figure 2a.

On notera que les organigrammes des modules de programmes représentés en figure 2b sont donnés à seul titre d'exemple, la réalisation des programmes correspondants n'étant pas décrite car à la portée de l'homme de métier.

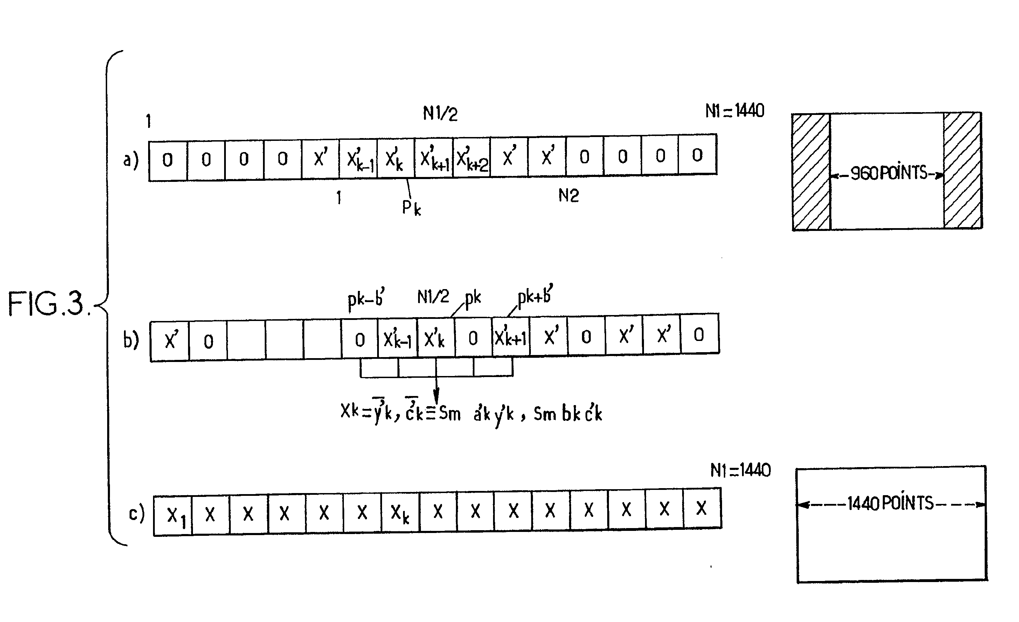

Une description plus détaillée du procédé objet de l'invention mise en oeuvre dans le cas du décodage du signal numérique de télévision haute définition codé en bande étroite, ainsi que décrit précédemment en liaison avec les figures 2a et 2b, sera maintenant donnée en liaison avec la figure 3.

Bien entendu, le processus de décodage peut être mis en oeuvre au niveau de la réception du signal HD-MAC BE en aval du décodeur BRD.

Le processus de décodage comprend de manière typique, à la réception du signal codé en bande étroite, une étape de décompression horizontale d'image.

Il est donc susceptible d'être mis en oeuvre au moyen d'une décompression horizontale de lignes et d'images du signal codé en bande étroite, de façon à ramener le nombre N2 de points effectifs par ligne de l'image haute définition à la valeur N1 initiale.

Ainsi qu'on l'a représenté en figure 3, les points images, en particulier les valeurs de composantes de luminance et de chrominance X'k pour le point image pk considéré, correspondent pour chaque ligne d'image aux points images obtenus après codage ainsi que représenté au point $\underline{c}$ de la figure 2a. Bien entendu, le format de l'image reçue correspond ainsi au format de l'image obtenue après codage.

Ainsi qu'on l'a représenté en figure 3, le processus de décodage consiste alors à intercaler au niveau de chaque ligne d'image une valeur arbitraire de composantes de luminance respectivement de chrominance, la valeur notée zéro au point $\underline{b}$ de la figure 3, sur un point image sur trois successifs notés pk-1, pk, pk+1. On comprendra bien sûr que l'insertion des valeurs arbitraires, de même que dans le processus de codage correspond à l'insertion d'une valeur de luminance et d'une valeur de chrominance correspondant à une valeur de gris, cette insertion pouvant simplement être effectuée par adressage de la valeur de gris correpondante entre deux valeurs successives non nulles de chrominance et de luminance.

Le processus de décodage objet de l'invention tel que représenté en figure 3 consiste ensuite à effectuer une interpolation des valeurs arbitraires par sommation pondérée sur $\underline{m}$ points images successifs pour le point image courant pk considéré. Sur la figure 3 la notation Xk désigne le couple de valeurs correspondant des valeurs moyennes pondérées de luminance $\overline{Y'k}$, de chrominance $\overline{C'k}$, ces valeurs moyennes étant obtenues par une somme pondérée des valeurs de chrominance respectivement de luminance et des valeurs arbitraires intercalées.

Bien entendu, les opérations précédentes sont répétées pour tous les points images pk d'ordre $\underline{k}$ de chaque ligne d'image pour $\underline{k}$ vérifiant les valeurs

$$\frac{m}{2} < k < N1 - \frac{m}{2} \qquad\qquad \text{si } n \text{ est pair}$$

$$\frac{m-1}{2} < k < N1 - \frac{m-1}{2} \qquad\qquad \text{si } n \text{ est impair.}$$

Le processus de décodage selon l'invention consiste ensuite à affecter les valeurs de composantes de luminance Y'k et de chrominance C'k, notées Xk, au point image pk de la ligne considérée pour reconstituer après les applications des étapes précédentes à chaque ligne d'image, une image au format haute définition reconstituée.

Bien entendu, on comprendra que pour la mise en oeuvre effective du processus de décodage tel qu'illustré schématiquement en figure 3, il est possible de faire appel au module de calcul correspondant utilisé pour la mise en oeuvre du processus de codage et précédemment décrit en liaison avec la figure 2b.

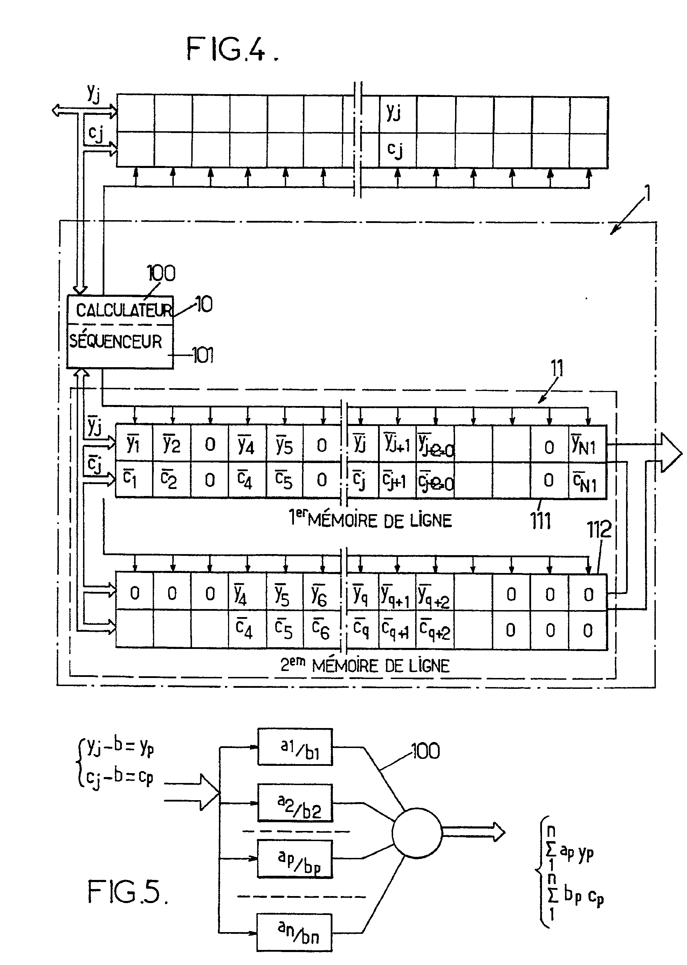

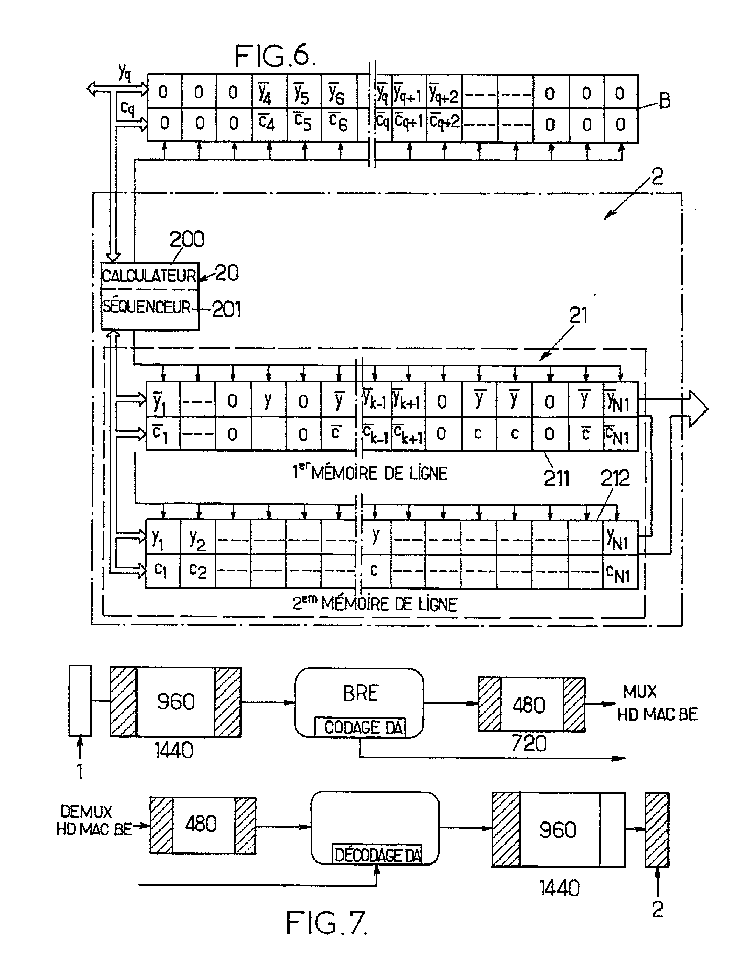

Une description plus détaillée d'un dispositif de codage permettant la mise en oeuvre du processus de codage conformément à l'objet de la présente invention sera maintenant donnée en liaison avec les figures 4 et 5.

Conformément à la figure 4, le dispositif de codage comprend un circuit 1 de compression horizontale par décimation des images en haute définition, le nombre N1 de points utiles par ligne de l'image haute définition étant amené à une valeur N2 après compression dans le rapport des fréquences d'échantillonnage.

Ainsi qu'on l'a représenté sur la figure 4, le circuit 1 de compression comporte un calculateur 10 sur $\underline{n}$ points images consécutifs de la ligne image haute définition mémorisée de la valeur moyenne pondérée des composantes de luminance Yj et de chrominance Cj de ces points pour tous les points images pj d'ordre $\underline{j}$, ainsi que définis précédemment pour la mise en oeuvre du processus de codage.

Le circuit de compression 1 comporte en outre un circuit 11 de mémorisation et de réordonnancement des valeurs moyennes pondérées Yj, Cj, une des valeurs moyennes Yj, Cj sur trois valeurs moyennes consécutives étant fixée à une valeur arbitraire fixe, ces valeurs arbitraires étant réordonnées en extrémité circuit de mémorisation pour constituer une ligne d'image haute définition à format réduit.

A titre d'exemple non limitatif, ainsi que représenté en figure 5, le calculateur 10 peut comporter un circuit 100 du type filtre numérique comportant $\underline{n}$ éléments d'atténuation notés a1, a2, ap, an ou b1, b2, bp bn et un opérateur de sommation, l'opérateur de sommation permettant de délivrer la valeur moyenne pondérée des $\underline{n}$ valeurs présentent à l'entrée de chacun des éléments d'atténuation. Un tel circuit de calcul ne sera pas décrit en détail, ce type de circuit étant normalement disponible dans le commerce sous la dénomination de MULAC, ce type de circuit étant fabriqué par le CNS, Centre Norbert Segard à Grenoble, France et commercialisé notamment par la société Matra Harris Semi-Conducteurs.

Selon un mode de réalisation avantageux du dispositif de codage tel que représenté en figure 4, le circuit 11 de mémorisation des valeurs moyennes pondérées peut comporter avantageusement une première mémoire de ligne notée 111 et une deuxième mémoire de ligne notée 112 connectées en parallèle, la première et la deuxième mémoires de ligne étant connectées en écriture/lecture à la sortie du circuit de calcul 100 tel que représenté en figure 5.

En outre, au calculateur 10 et au circuit de calcul 100 est associé un circuit séquenceur noté 101 permettant d'assurer la commande en lecture/écriture des première et deuxième mémoires de ligne de façon alternée.

Le fonctionnement du dispositif de codage objet de l'invention tel que représenté en figure 4 est alors le suivant.

A partir d'une mémoire auxiliaire notée A, laquelle peut ou non être incorporée au dispositif de codage tel que représenté en figure 4, cette mémoire auxiliaire assurant en fait la fonction d'une mémoire tampon pour les composantes de chrominance et de luminance des points images d'une ligne du signal numérique haute définition préalablement au codage en bande étroite de celui-ci, le circuit calculateur 10 permet tout d'abord d'effectuer l'inscription dans la première mémoire ligne 111 des valeurs moyennes pondérées de luminance et de chrominance calculées à partir des valeurs de composantes de luminance et de chrominance de la ligne image correspondante mémorisées en mémoire auxiliaire $\underline{A}$, les $\underline{n}$ valeurs sur lesquelles porte la pondération étant appelées par le séquenceur 101 et affectées en entrée des éléments d'atténuation a1 à an, b1 à bn du circuit de calcul 100, lequel délivre les valeurs moyennes pondérées correspondantes.

Les valeurs moyennes de luminance et de chrominance ayant ainsi été obtenues et inscrites en première mémoire ligne, l'appel du programme de tri par le calculateur 10 permet d'assurer l'insertion des valeurs arbitraires notées zéro sur la figure 4 entre deux valeurs moyennes pondérées successives de luminance respectivement de chrominance. L'appel par le calculateur 10 du programme de réordonnancement par rapport au point image d'ordre N1/2, ainsi que décrit en liaison avec le procédé de codage objet de l'invention, permet alors d'effectuer le réordonnancement précité et l'inscription en deuxième mémoire ligne des valeurs réordonnées ainsi que représenté en figure 4. Le séquenceur 101 permet alors d'effectuer la transmission de la ligne d'image en format réduit mémorisée dans la deuxième mémoire ligne, correspondant au signal codé en bande étroite, en lieu et place des valeurs de composantes de chrominance et de luminance initiales du signal numérique d'origine.

Bien entendu on comprendra que pour la trame de transmission du signal numérique d'origine suivante, le rôle des première et deuxième mémoires de ligne est inversé.

On notera en outre que la présence de la mémoire auxiliaire A n'est pas indispensable pourvu que le calculateur 10 et le séquenceur 101 soient susceptibles d'assurer les traitements correspondants pendant la durée de la trame de transmission. Dans ce cas, la fonction de mémoire tampon de la mémoire auxiliaire A peut être dévolue, par exemple, à la deuxième mémoire de ligne laquelle est ainsi utilisée en début de processus de traitement pour assurer le rôle de mémoire tampon.

Afin d'assurer le décodage du signal codé en bande étroite et diffusé sur un canal de type HD-MAC en diffusion HD-MAC BE, il est nécessaire de prévoir un dispositif de décodage correspondant, ce dispositif comportant au moins un système de restitution de format d'image par décompression horizontale de ligne d'image.

Sur la figure 6 on a représenté un dispositif de décodage lequel permet par mise en oeuvre des opérations duales des opérations de codage d'assurer le décodage du signal codé en bande étroite.

De manière analogue au dispositif de codage tel que représenté en figure 4, le dispositif de décodage 2 peut comporter un circuit 21 de mémorisation de lignes des valeurs de composantes de luminance et de chrominance codées des points images pk d'une ligne d'image considérée et un calculateur 20 d'inscription/lecture du circuit 21 de mémorisation de ligne, ce circuit d'inscription/lecture permettant d'intercaler au niveau de chaque ligne d'image une valeur arbitraire de composantes de luminance respectivement de chrominance sur un point d'image sur trois successifs pk-1, pk, pk+1.

En outre, un circuit de calcul 200 est prévu afin d'effectuer une interpolation des valeurs arbitraires des composantes luminance et de chrominance pour établir une valeur des composantes de luminance respectivement de chrominance pour un point d'image pk considéré.

Bien entendu, il peut dans des conditions analogues à celles du dispositif de codage de la figure 4 être prévu une mémoire auxiliaire de ligne d'image notée B, laquelle est destinée à recevoir les composantes de luminance et de chrominance codées en bande étroite comme mémoire tampon.

Ainsi qu'on le notera à l'observation de la figure 6, le circuit de mémorisation 21 comprend de manière analogue au circuit de codage représenté en figure 4 une première 211 et une deuxième 212 mémoire de ligne, lesquelles sont connectées en parallèle. La première et la deuxième mémoire de ligne sont connectées en écriture/lecture à la sortie du circuit de calcul 200. De même, un circuit 201 séquenceur en lecture/écriture des première et deuxième mémoires de ligne est prévu afin d'effectuer la commande en écriture et en lecture des première et deuxième mémoires de ligne de façon alternée.

Le fonctionnement du dispositif de décodage tel que représenté en figure 6 est analogue au fonctionnement du dispositif de codage représenté en figure 4, les opérations mises en oeuvre étant les opérations duales.

On notera en particulier que le calculateur 20 d'inscription/lecture comporte un circuit de calcul 200 de type semblable à celui représenté en figure 5 relativement au dispositif de codage. Toutefois, le circuit de calcul 100 mis en oeuvre dans le dispositif de codage comporte, tant en ce qui concerne les valeurs de composantes de luminance que de chrominance, 47 coefficients de valeur déterminée, ces coefficients consistant en des coefficients de valeur réelle positive ou négative, le paramètre n étant égal à 47, alors que le circuit de calcul 200 correspondant du dispositif décodeur pourra, le cas échant, être limité à 9 coefficients d'atténuation pour les valeurs de composantes de chrominance et de luminance, le paramètre m alors étant égal à 9.

Un tableau des valeurs des coefficients ai, bi, dans le cas où 47 coefficients sont utilisés, tant pour le dispositif de codage que pour le dispositif de décodage, est donné en annexe à la description, dans le cas d'un circuit de calcul 200 formant filtre à deux phases, respectivement à trois phases, ces coefficients étant symétriques par rapport au coefficient central de rang 24.

Le fonctionnement du dispositif de décodage tel que représenté en figure 6 est le suivant.

Pour les valeurs de composantes de luminance et de chrominance en bande étroite et au format réduit

8

mémorisées dans la mémoire tampon B, l'appel du programme de tri par le calculateur 20 permet d'assurer l'insertion des valeurs arbitraires entre deux valeurs successives de luminance respectivement de chrominance dans la première mémoire de ligne par exemple. L'appel par le calculateur 20 du programme de calcul des valeurs moyennes pondérées de luminance et de chrominance permet la lecture de m valeurs successives mémorisées dans la première mémoire de ligne et l'affectation de ces valeurs au circuit de calcul 200, lequel délivre les valeurs moyennes pondérées correspondantes. Ces valeurs moyennes pondérées pour chaque point image pk de la ligne d'image correspondante sont alors inscrites dans la deuxième mémoire de ligne à l'adresse k du point image pk correspondant. Le séquenceur 201 permet ensuite d'assurer la transmission de l'ensemble des valeurs de luminance et de chrominance, ainsi reconstituées par interpolation et inscrites dans la deuxième mémoire de ligne 212. Bien entendu lors de la trame de transmission de données numériques suivantes du signal numérique haute définition, le rôle de la première et de la deuxième mémoire de ligne est interverti.

On comprendra de manière analogue que l'utilisation d'un séquenceur et d'un calculateur 20 rapide permet de supprimer la mémoire tampon B, le rôle de mémoire tampon pouvant alors être rempli par la deuxième mémoire de ligne par exemple.

Une description de l'architecture générale d'un dispositif complet, constitutif en fait d'un canal HD-MAC BE conformément à l'objet de la présente invention, sera donnée en liaison avec la figure 7.

Sur la figure précitée on a représenté les éléments principaux d'un canal de type HD-MAC BE, en particulier le codeur réducteur de bande BRE et le décodeur restituteur de bande BRD schématiquement. En outre, on comprendra que les dispositifs de codage 1 et décodage 2 tels que décrits précédemment en liaison avec les figures 4 et 6 sont interconnectés en interfaces amont du codeur réducteur de bande BRE respectivement aval du décodeur restituteur de bande BRD, les dispositifs de codage 1 et de décodage 2 conformes à l'objet de la présente invention étant simplement représentés par leur bloc fonctionnel correspondant.

En ce qui concerne le fonctionnement d'un codeur réducteur de bande de type HD-MAC alimenté par le signal codé en bande étroite tel que décrit précédemment, il faut indiquer que certains modules du codeur réducteur de bande BRE doivent être modifiés. En particulier, la taille des blocs de décision normalement comportant 16x16 pixels (horizontale x verticale) doit être ramenée à 12x16 afin de garder une certaine taille horizontale après extension horizontale dans le rapport 3/2 par la conversion finale effectuée en aval du décodeur restituteur de bande par le décodeur 2 objet de la présente invention, la fréquence d'échantillonnage de valeur f2 égale à 36 MHz étant ramenée à la fréquence f1 initiale à 54 MHz.

De même, en ce qui concerne le codage des données d'assistance TV, ces données d'assistance étant relatives à l'information des champs de décision et de vecteurs mouvement, celui-ci doit être modifié afin de respecter la nouvelle contrainte de débit des données d'assistance, ce débit utile, égal à 1,1 Mbit par seconde dans le cadre du canal HD-MAC initial, devant être ramené à 0,7 Mbit par seconde c'est-à-dire dans le rapport des fréquences d'échantillonnage f2 à f1 ainsi que mentionné précédemment.

On comprendra que la réduction du débit des données d'assistance, ces données d'assistance étant normalement codées en code duobinaire par exemple, peut être obtenue soit par la réduction du nombre de pixels constitutifs des blocs de décision dans le protocole de transmission HD-MAC ou en utilisant un nouvel estimateur de mouvement par exemple. Pour une description détaillée d'un tel estimateur de mouvement, on pourra se reporter à la demande de brevet français intitulée "Estimateur de mouvement pour images de télévision numériques diffusées sur canal HD-MAC en bande étroite" déposée au nom de la demanderesse sous le numéro de dépôt 9003549 le même jour que la présente demande. On rapelle que les données d'assistance TV notées DATV sont obtenues dans le codeur HD-MAC à partir des données d'images divisées en petits blocs, quelques dizaines de milliers par image, sur lesquels sont effectuées des mesures d'activité spatio-temporelles de ces images d'une manière homogène. Cette mesure d'activité par bloc est transmise vers le décodeur HD-MAC par les données d'assistance TV précitées, le codeur HD-MAC contrôlant à distance le décodage en fonction des données d'assistance TV.

On notera que les unités de filtrage de sous-échantillonnage d'un codeur réducteur de bande BRE fonctionnant à partir d'un signal codé en bande étroite conformément à l'objet de la présente invention, en vue d'une diffusion sur un canal de type HD-MAC BE, sont identiques à celles d'un codeur réducteur de bande d'un canal de type HD-MAC dans la mesure où ces unités opèrent au niveau des points images.

En ce qui concerne les modules travaillant au niveau des blocs, bloc de décision, bloc de décision et d'estimation de mouvement et bloc de codage des données d'assistance TV, ceux-ci doivent être légèrement modifiés pour tenir compte notamment de la réduction de débit des données d'assistance ainsi que mentionnée précédemment.

On remarquera ainsi que représenté de manière schématique sur la figure 7, que la sortie du codeur réducteur de bande BRE fonctionnant en bande étroite, car alimenté par une source délivrant un signal numérique codé en bande étroite par l'intermédiaire du dispositif de codage 1 objet de la présente invention, possède également des bords au gris avec une partie utile centrée sur l'image, cette partie utile occupant 480 points sur 720, le tout sur 576 lignes utiles par image. Le signal délivré par le codeur réducteur de bande fonctionnant en bande étroite peut alors être délivré au multiplexeur HD-MAC tel que décrit dans la demande de brevet français N° 89 12410 au nom de la demanderesse. On notera toutefois que le signal délivré par le codeur réducteur de bande BRE est directement enregistrable sur un magnétoscope numérique au standard 4 2 2.

En ce qui concerne le décodeur restituteur de bande BRD, le signal HD-MAC BE précité correspondant à un signal au format 4 2 2 à 720 points par ligne et à 288 lignes par trame, celui-ci peut attaquer directement un décodeur restituteur de bande ou BRD HD-MAC.

En fait, et compte tenu de la réduction de débit de transmission des données d'assistance TV DATV, seule la carte de décodage de ces données doit être modifiée. Il est alors suffisant d'effectuer la modification, compte tenu par exemple du nombre de pixels par bloc précédemment mentionnée dans la description. Tous les autres modules fonctionnent normalement sans aucune modification car ceux-ci sont basés sur un fonctionnement au niveau de chaque point image ou sur des blocs élémentaires de 4x4 pixels, lesquels sont compatibles avec des blocs de 12 pixels de large ainsi que mentionné précédemment.

Ainsi qu'on l'a représenté en figure 7 il est alors seulement nécessaire de rajouter une unité de décompression numérique en aval du décodeur réducteur de bande BRD HD-MAC BE afin de restituer un signal plein écran.

La décompression précitée peut alors être mise en oeuvre à l'aide du dispositif de décodage 2 objet de la présente invention tel que décrit précédemment dans la description, ou, le cas échéant, le dispositif de décodage 2 n'étant pas inséré, au moyen d'un échantillonnage à la fréquence f2, soit à 36 MHz. Dans ce dernier cas, le signal numérique délivré par le décodeur restituteur de bande BRD fonctionnant en bande étroite peut simplement être transmis à un convertisseur numérique-analogique fonctionnant à la fréquence f2 précitée, soit à 36 MHz, afin de restituer les composantes vidéo correspondantes.

On a ainsi décrit un procédé et un dispositif de codage-décodage d'un signal numérique de télévision haute définition en un signal codé en bande étroite permettant d'assurer la diffusion du signal codé sur un canal de type HD-MAC pour assurer une diffusion de type HD-MAC BE ou HD-MAC bande étroite.

Le procédé et le dispositif de codage-décodage objet de l'invention apparaissent particulièrement avantageux dans la mesure où, d'une part, ils permettent d'assurer une compatibilité avec les normes de production d'image définie par le CCIR ainsi que déjà mentionné dans la description et où, d'autre part, une compatibilité telle que définie précédemment dans la description avec les équipements des canaux HD-MAC d'origine est assurée.

En outre on remarquera, ainsi qu'il a déjà été mentionné dans la description, que les signaux numériques codés en bande étroite et en format réduit tels que délivrés d'une part par le codeur réducteur de bande HD-MAC BRE sont enregistrables sur un magnétoscope numérique.

**ANNEXE :**

Filtre à deux phases - Dispositif de codage

| Rang des coefficients | | Valeur des coefficients |
|---|---|---|
| Coefficient central | 24 | 892 |
| 23 | 25 | 636 |
| 22 | 26 | 128 |
| 21 | 27 | -172 |
| 20 | 28 | -112 |
| 19 | 29 | 62 |
| 18 | 30 | 89 |
| 17 | 31 | -10 |
| 16 | 32 | -64 |
| 15 | 33 | -14 |
| 14 | 34 | 40 |
| 13 | 35 | 23 |
| 12 | 36 | -20 |
| 11 | 37 | -23 |
| 10 | 38 | 6 |
| 9 | 39 | 17 |
| 8 | 40 | 2 |
| 7 | 41 | -11 |
| 6 | 42 | -4 |
| 5 | 43 | 5 |
| 4 | 44 | 5 |
| 3 | 45 | -2 |
| 2 | 46 | -4 |
| 1 | 47 | 1 |

## Filtre à trois phases - Dispositif de décodage

| Rang des coefficients | | Valeur des coefficients |
|---|---|---|
| Coefficient central | 24 | 1 338 |
| 23 | 25 | 954 |
| 22 | 26 | 191 |
| 21 | 27 | -258 |
| 20 | 28 | -168 |
| 19 | 29 | 94 |
| 18 | 30 | 134 |
| 17 | 31 | -17 |
| 16 | 32 | -96 |
| 15 | 33 | -20 |
| 14 | 34 | 60 |
| 13 | 35 | 35 |
| 12 | 36 | -30 |
| 11 | 37 | -34 |
| 10 | 38 | 9 |
| 9 | 39 | 26 |
| 8 | 40 | 3 |
| 7 | 41 | -16 |
| 6 | 42 | -7 |
| 5 | 43 | 8 |
| 4 | 44 | 7 |
| 3 | 45 | -2 |
| 2 | 46 | -6 |
| 1 | 47 | 0 |

**Revendications**

1. Procédé de codage d'un signal numérique de télévision haute définition en un signal codé en bande étroite en vue de la diffusion de ce signal numérique de télévision sur un canal de type HD-MAC, ledit signal numérique de télévision étant représentatif d'images en haute définition échantillonnées à une fréquence $f_1$ et le signal codé correspondant à un signal à bande étroite échantillonné à une fréquence d'échantillonnage $f_2$ en vue de sa diffusion en bande étroite, HD-MAC BE, avec $f_2 < f_1$, caractérisé en ce que ledit procédé consiste à effectuer une compression horizontale, par décimation, desdites images à haute définition, de façon à ramener le nombre $N_1$ de points utiles, par ligne, de l'image haute définition, à une valeur $N_2 = \alpha N_1$, après compression, dans le rapport desdites fréquences d'échantillonnage, $\alpha = f_2/f_1$, pour constituer ainsi un signal codé en bande étroite représentatif d'une ligne d'image et d'images haute définition à format

12

réduit.

2. Procédé selon la revendication 1, caractérisé en ce que la décimation est effectuée par les opérations consistant à :

a)- calculer, sur $\underline{n}$ points images consécutifs $pj-b$ à $pj+b$ avec $b=n/2$ ou $b=(n-1)/2$ de chaque ligne de l'image haute définition, la valeur moyenne pondérée $\overline{Yj}$, $\overline{Cj}$ des composantes de luminance $Yj$ et de chrominance $Cj$ desdits points,

b)- attribuer à deux points $pj$, $pj+1$ successifs, sur trois, pour valeur de luminance $Yj$, et de chrominance $Cj$ respectivement $Yj+1$, $Cj+1$, les valeurs moyennes $\overline{Yj}$, $\overline{Cj}$ respectivement $\overline{Yj+1}$, $\overline{Cj+1}$ de composante de luminance et de chrominance, les valeurs de composante de luminance et de chrominance du troisième point $pj+2$ étant fixées à une valeur arbitraire,

c)- répéter les opérations a) et b) pour tous les points images $pj$ d'ordre $j$ de chaque ligne tel que

$$\frac{n}{2} < j < N1 - \frac{n}{2} \qquad \text{si n est pair}$$

ou

$$(n-1)/2 < j < N1 - (n-1)/2 \qquad \text{si n est impair,}$$

– réordonner lesdites valeurs calculées, non arbitraires, attribuées aux valeurs de composantes de luminance et de chrominance par rapport au point image milieu d'ordre N1/2, lesdites valeurs arbitraires de luminance et de chrominance des points images décimés étant réordonnées en extrémité de ligne correspondante pour ainsi constituer une image de format réduit recentrée par rapport au point image milieu d'ordre N1/2.

3. Procédé de décodage d'un signal numérique de télévision haute définition codé en un signal codé en bande étroite selon le procédé de la revendication 1, caractérisé en ce qu'il comprend, à la réception de ce signal, une étape de décompression horizontale d'image.

4. Procédé selon la revendication 3, caractérisé en ce que celui-ci consiste à effectuer une décompression horizontale de ligne et d'image du signal codé en bande étroite, de façon à ramener le nombre N2 de points effectifs par ligne de l'image haute définition à la valeur N1, ledit procédé consistant à :

a)- intercaler au niveau de chaque ligne d'image une valeur arbitraire de composante de luminance respectivement de chrominance sur un point image sur trois successifs $pk-1$, $pk$, $pk+1$,

b)- effectuer une interpolation desdites valeurs arbitraires par sommation pondérée sur $\underline{m}$ points images successifs des valeurs de luminance respectivement de chrominance pour établir une valeur de luminance $Yk$ respectivement de chrominance $Ck$ pour un point image courant $pk$ considéré,

c)- répéter les opérations a) et b) pour tous les points images $pk$ d'ordre $k$ de chaque ligne tel que :

$$\frac{m}{2} < k < N1 - \frac{m}{2} \qquad \text{si n est pair}$$

$$\frac{m-1}{2} < k < N1 - \frac{m-1}{2} \qquad \text{si n est impair,}$$

d)- affecter les valeurs de composantes de luminance $Yk$ et de chrominance $Ck$ aux points images $pk$ de la ligne considérée pour reconstituer, après application des étapes précédentes à chaque ligne d'image, une image au format haute définition reconstitué.

5. Procédé selon la revendication 3, caractérisé en ce que ladite étape de décompression d'image consiste, à la réception du signal codé, à effectuer en sortie du décodeur HD-MAC, une expansion de format par changement de fréquence pour obtenir une image au format image amélioré.

**6.** Dispositif de codage d'un signal numérique de télévision haute définition en un signal codé en bande étroite, en vue de la diffusion de ce signal numérique de télévision sur un canal de type HD-MAC, ledit signal numérique de télévision étant représentatif d'images en haute définition échantillonnées à une fréquence f1 et le signal codé correspondant à un signal échantillonné à une fréquence f2, en vue de sa diffusion en bande étroite, HD-MAC BE, avec f2 < f1, caractérisé en ce que ce dispositif comprend des moyens (1) de compression horizontale, par décimation, desdites images en haute définition, de façon à ramener le nombre N1 de points utiles, par ligne de l'image haute définition, à une valeur N2 = αN1, après compression, dans le rapport des fréquences d'échantillonnage, $\alpha = \dfrac{f2}{f1,}$

et ainsi constituer un signal codé en bande étroite représentatif d'une ligne d'image et d'images haute définition à format réduit.

**7.** Dispositif de codage selon la revendication 6, caractérisé en ce que lesdits moyens ( 1 ) de compression comportent :
– des moyens ( 10 ) de calcul, sur $\underline{n}$ points image consécutifs pj à pj+n de la ligne d'image haute définition mémorisée, de la valeur moyenne pondérée des composantes de luminance $\overline{Yj}$ et de chrominance $\overline{Cj}$ desdits points, pour tous les points image pj d'ordre j tels que :

$$\frac{n}{2} \,\leqslant\, j \,\leqslant\, N1 - \frac{n}{2} \qquad\qquad \text{pour n pair ou}$$

$$\frac{n-1}{2} \,\leqslant\, j \,\leqslant\, N1 - \frac{n-1}{2} \qquad\qquad \text{pour n impair,}$$

– des moyens (11) de mémorisation et de réordonnancement desdites valeurs moyennes pondérées $\overline{Yj}$, $\overline{Cj}$, une desdites valeurs moyennes $\overline{Yj}$, $\overline{Cj}$ sur trois valeurs moyennes $\overline{Yj}$, $\overline{Cj}$, $\overline{Yj+1}$, $\overline{Cj+1}$, $\overline{Yj+2}$, $\overline{Cj+2}$ consécutives étant fixée à une valeur arbitraire fixe, lesdites valeurs arbitraires, pour réordonnancement, étant réordonnées en extrémité des moyens de mémorisation de ligne pour constituer une ligne d'image haute définition à format réduit.

**8.** Dispositif de codage selon la revendication 7, caractérisé en ce que lesdits moyens (11) de mémorisation des valeurs moyennes pondérées comportent :
– une première mémoire de ligne (111) et une deuxième mémoire de ligne (112) connectées en parallèle, la première et la deuxième mémoire de ligne étant connectées en écriture/lecture à la sortie des moyens de calcul (100),
– des moyens (101) de commande en lecture/écriture desdites première et deuxième mémoire de ligne de façon alternée.

**9.** Dispositif de décodage d'un signal numérique de télévision haute définition codé en bande étroite et diffusé sur un canal HD-MAC, ce signal numérique de télévision étant représentatif d'images en haute définition échantillonnées à une fréquence f1 et le signal codé en bande étroite correspondant à un signal échantillonné à une fréquence f2, avec f2 < f1, caractérisé en ce que ce dispositif comporte des moyens (2) de restitution de format d'image par décompression horizontale de ligne d'image.

**10.** Dispositif de décodage selon la revendication 9, caractérisé en ce que celui-ci comporte :
– des moyens (21) de mémorisation de ligne des valeurs de composantes de luminance et de chrominance codées des points images pk d'une ligne d'image considérée et,
– des moyens (20) d'inscription-lecture desdits moyens de mémorisation de ligne permettant d'intercaler, au niveau de chaque ligne d'image, une valeur arbitraire de composante de luminance respectivement de chrominance sur un point d'image sur trois successif pk-1, pk, pk+1,
– des moyens de calcul (200) permettant d'effectuer une interpolation des valeurs arbitraires de composantes de luminance respectivement de chrominance pour établir une valeur de composante de luminance Yk respectivement de luminance Ck pour un point image courant pk considéré.

11. Dispositif de décodage selon la revendication 11, caractérisé en ce que lesdits moyens de mémorisation de ligne (21) comportent :

- une première (211) et une deuxième (212) mémoire de ligne, connectées en parallèle, la première et la deuxième mémoire de ligne étant connectées en écriture-lecture à la sortie des moyens de calcul (200),

- des moyens (201) de commande en lecture/écriture desdites première et deuxième mémoires de ligne de façon alternée.

12. Dispositif de décodage selon la revendication 10, caractérisé en ce que celui-ci comporte des moyens d'échantillonnage à la fréquence f2, lesdits moyens d'échantillonnage permettant de transformer le signal codé en bande étroite.

# FIG.1a. (ART ANTERIEUR)

```
┌──────────┐   ┌──────────┐   ┌──────────┐         ┌──────────┐   ┌──────────┐        ┌──────────┐           ┌──────────┐
│  SOURCE  │   │  CODEUR  │   │  HD MAC  │         │ CANAL  │ │ CANAL  │        │  HD MAC  │           │ DECODEUR │
│          │──▶│ HD MAC   │──▶│          │─────────│        │ │        │───────▶│          │──────────▶│ HD MAC   │
│    HD    │   │   B R E  │   │   MUX    │         │ HD MAC │ │ HD MAC │        │  DEMUX   │           │   B R D  │
└──────────┘   └──────────┘   └──────────┘         └──────────┘ └──────────┘    └──────────┘           └──────────┘
```

MAC DEMUX → VISU STANDARD FORMAT 4/3

SON ET DONNÉES

SON ET DONNÉES

VISU HD FORMAT 16/9 50Hz

VISU HD FORMAT 16/9 100Hz

# FIG.1b. (ART ANTERIEUR)

VISU STANDARD MAC

FORMAT 4/3
625/50/2:1
13,5 MHz

VISU HD MAC

FORMAT 16/9
1250/50/2:1
576 LIGNES ACTIVES
PAR TRAME
54 MHz

VISU HD MAC

FORMAT 16/9
1250/100/2:1
576 LIGNES ACTIVES
PAR TRAME
108 MHz

EP 0 448 450 A1

FIG.2a.

EP 0 448 450 A1

INITIALISATION N1, n
$b = \dfrac{n-1}{2}$ ou $b = \dfrac{n}{2}$ — 1000

$j = b$ — 1001

CALCUL:
$\bar{y}_j = \sum\limits_{j-b}^{j+b} a_j\, y_j$

$\bar{c}_j = \sum\limits_{j-b}^{j+b} b_j\, c_j$ — 1002

$j = j + 1$

$\bar{j} = N1\_b$  $-$  $+$

$j = b$ — 1005

$\left.\begin{array}{l} y_j = \bar{y}_j \\ c_j = \bar{c}_j \end{array}\right\} j$

$\left.\begin{array}{l} y_{j+1} = \bar{y}_{j+1} \\ c_{j+1} = \bar{c}_{j+1} \end{array}\right\} j+1$

$\left.\begin{array}{l} y_{j+2} = 0 \\ c_{j+2} = 0 \end{array}\right\} j+2$  MOD 3 — 1006

$j = j + 1$

$j = N1$  $-$  $+$ — 1007

$j = \dfrac{N1}{2}$   $X'_j \begin{cases} \bar{y}_j \\ \bar{c}_j \end{cases}$

$j = \dfrac{N1}{2} \pm k$   $X'_j \begin{cases} \bar{y}_j(k)\,si\ \bar{y}_j(k) \neq 0 \\ \bar{c}_j(k)\,si\ \bar{c}_j(k) \neq 0 \end{cases}$

$X'_j \begin{cases} \bar{y}_j(k+1)\,si\ \bar{y}_j(k) = 0 \\ \bar{c}_j(k+1)\,si\ \bar{c}_j(k) = 0 \end{cases}$ — 1009

FIG.2b.

18

EP 0 448 450 A1

19 FIG.3.

a)

$1$     $N1/2$     $N1 = 1440$

| 0 | 0 | 0 | 0 | $X'$ | $X'_{k-1}$ | $X'_k$ | $X'_{k+1}$ | $X'_{k+2}$ | $X'$ | $X'$ | 0 | 0 | 0 | 0 |

$1$     $P_k$     $N2$

←960 POINTS→

b)

$p_k - b'$    $N1/2$   $p_k$    $p_k + b'$

| $X'$ | 0 |  |  |  | 0 | $X'_{k-1}$ | $X'_k$ | 0 | $X'_{k+1}$ | $X'$ | 0 | $X'$ | $X'$ | 0 |

$$Xk = \overline{y'}k, \ \overline{c}k \equiv Sm \ a'k \ y'k , \ Sm \ bk \ c'k$$

c)

$N1 = 1440$

| $X_1$ | $X$ | $X$ | $X$ | $X$ | $X$ | $X_k$ | $X$ | $X$ | $X$ | $X$ | $X$ | $X$ | $X$ | $X$ |

←--1440 POINTS--→

# FIG.4.

1er MÉMOIRE DE LIGNE

2em MÉMOIRE DE LIGNE

$$\begin{cases} y_j - b = y_p \\ c_j - b = c_p \end{cases}$$

# FIG.5.

$$\begin{cases} \sum\limits_{1}^{n} a_p\, y_p \\ \sum\limits_{1}^{n} b_p\, c_p \end{cases}$$

# FIG.6.

# FIG.7.

Office européen
des brevets

**RAPPORT DE RECHERCHE EUROPEENNE**

Numero de la demande

EP    91 40 0707

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0352963 (BRITISH BROADCASTING CORPORATION)<br>* colonne 4, ligne 37 - colonne 5, ligne 32; figures 5, 6 *<br>--- | 1, 3, 6, 9 | H04N7/00<br>H04N11/02 |
| A | GB-A-2191060 (RCA CORPORATION)<br>* page 4, ligne 6 - page 5, ligne 19; figures 2, 4 *<br>--- | 1, 3, 6, 9 | |
| A | US-A-4661862 (THOMPSON)<br>* colonne 2, ligne 67 - colonne 4, ligne 17; figure 1 *<br>----- | 1, 6 | |

**DOMAINES TECHNIQUES RECHERCHIES (Int. Cl.5 )**

H04N7/00
H04N11/00

Le présent rapport a été établi pour toutes les revendications

| Lieu de la recherche | Date d'achèvement de la recherche | Examinateur |
|---|---|---|
| BERLIN | 18 JUIN 1991 | DUDLEY C. |